# EUROPÄISCHE PATENTSCHRIFT

(11) **EP 4 003 893 B1**
(45) Veröffentlichungstag und Bekanntmachung des Hinweises auf die Patenterteilung: **12.04.2023**
(21) Anmeldenummer: 20736742.6
(22) Anmeldetag: 10.07.2020
(51) Int. Cl.: B66B 13/30, F16B 5/02

(54) **SICHERUNGSVORRICHTUNG ZUM SICHERN EINER POSITION EINER WINKELKONSOLE EINER SCHACHTTÜRSCHWELLE EINES AUFZUGSCHACHTS, DAMIT AUSGESTATTETE WINKELKONSOLE UND SICHERUNGSPLATTE SOWIE VERFAHREN ZUM NACHRÜSTEN EINER SOLCHEN SICHERUNGSPLATTE**
SECURING DEVICE FOR SECURING A POSITION OF AN ANGLE BRACKET OF A SHAFT DOOR THRESHOLD OF AN ELEVATOR SHAFT, ANGLE BRACKET EQUIPPED WITH SAME AND SECURING PLATE, AND METHOD FOR RETROFITTING SUCH A SECURING PLATE
DISPOSITIF DE FIXATION PERMETTANT DE FIXER UNE POSITION D'UNE CONSOLE D'ANGLE D'UN SEUIL DE PORTE D'UNE CAGE D'ASCENSEUR, CONSOLE D'ANGLE ÉQUIPÉE D'UN TEL DISPOSITIF DE FIXATION ET PLAQUE DE FIXATION, AINSI QUE PROCÉDÉ DE MISE À NIVEAU D'UNE TELLE PLAQUE DE FIXATION

(30) Priorität: 22.07.2019 EP 19187567
(43) Veröffentlichungstag der Anmeldung: 01.06.2022
(73) Patentinhaber: INVENTIO AG, 6052 Hergiswil (CH)
(72) Erfinder: MEIER, Raphael, 6030 Ebikon (CH)
(74) Vertreter: Inventio AG
(86) Internationale Anmeldenummer: PCT/EP2020/069638
(87) Internationale Veröffentlichungsnummer: WO 2021/013588

(56) Entgegenhaltungen:
- EP-A1- 0 803 463
- DE-U1- 29 511 766
- GB-A- 2 234 540
- GB-A- 2 242 722

## Beschreibung

Die vorliegende Erfindung betrifft eine Sicherungsvorrichtung zum Sichern einer Position einer Winkelkonsole einer Schachttürschwelle eines Aufzugschachts, eine Winkelkonsole für eine Schachttürschwelle eines Aufzugschachts, eine Sicherungsplatte für eine Winkelkonsole für eine Schachttürschwelle eines Aufzugschachts und ein Verfahren zum Nachrüsten einer solchen Sicherungsplatte.

Eine Türschwelle einer Schachttüre eines Aufzugs kann zumindest eine Führungseinrichtung zum Führen zumindest eines Türblatts der Schachttüre aufweisen. Das Türblatt kann in die Führungseinrichtung eingreifen und so auch an einer Unterkante geführt sein. Die Türschwelle kann in einen Aufzugschacht des Aufzugs hineinragen und unter Verwendung von Winkelkonsolen an einer Wand des Aufzugschachts befestigt sein. Die Winkelkonsolen können an die Wand geschraubt sein. Die Winkelkonsolen können kraftschlüssig, d.h. insbesondere durch Reibung aufgrund einer Zugkraft der Verschraubung, an der Wand gehalten und positioniert sein.

Die EP 0 803 463 A1 zeigt eine Türschwelle für einen Aufzug mit einer Winkelkonsole.

Zum Ausgleichen von Toleranzen kann die Verschraubung in einem Langloch der Winkelkonsole angeordnet sein. Wenn die Reibung zwischen der Winkelkonsole und der Wand zu gering ist, kann die Winkelkonsole bei einer Krafteinwirkung mit einer parallel zur Wand wirkenden Kraftkomponente an der Wand abrutschen, bis ein Rand des Langlochs an der Verschraubung anliegt. Durch das Abrutschen der Winkelkonsole kann auch die Türschwelle abrutschen. Wenn die Türschwelle abgerutscht ist, kann der Eingriff des Türblatts in die Führungseinrichtung reduziert sein oder ganz wegfallen.

Es kann unter anderem ein Bedarf an einer alternativen Ausgestaltung jeweils einer Sicherungsvorrichtung zum Sichern einer Position einer Winkelkonsole einer Schachttürschwelle eines Aufzugschachts, einer Winkelkonsole für eine Schachttürschwelle eines Aufzugschachts, einer Sicherungsplatte für eine Winkelkonsole für eine Schachttürschwelle eines Aufzugschachts und einem Verfahren zum Nachrüsten einer solchen Sicherungsplatte bestehen. Insbesondere kann ein Bedarf an einer Ausgestaltung solcher Komponenten bzw. Verfahren bestehen, die eine hohe Sicherheit und/oder Genauigkeit bei der Positionierung der Winkelkonsole und/oder eine einfache Montage ermöglichen.

Einem solchen Bedarf kann durch eine Sicherungsvorrichtung zum Sichern einer Position einer Winkelkonsole einer Schachttürschwelle eines Aufzugschachts, eine Winkelkonsole für eine Schachttürschwelle eines Aufzugschachts, eine Sicherungsplatte für eine Winkelkonsole für eine Schachttürschwelle eines Aufzugschachts und ein Verfahren zum Nachrüsten einer solchen Sicherungsplatte gemäß den unabhängigen Ansprüchen entsprochen werden. Vorteilhafte Ausführungsformen sind in den abhängigen Ansprüchen sowie der nachfolgenden Beschreibung definiert. Eine solche Sicherungsvorrichtung kann an weiteren Komponenten des Aufzugs angeordnet sein. Gemäß einem ersten Aspekt der Erfindung wird eine Sicherungsvorrichtung zum Sichern einer Position einer Winkelkonsole einer Schachttürschwelle eines Aufzugschachts gemäß Anspruch 1 vorgeschlagen.

Gemäß einem zweiten Aspekt der Erfindung wird ein Verfahren zum Nachrüsten einer Sicherungsplatte an einer Winkelkonsole einer Schachttürschwelle eines Aufzugschachts gemäß Anspruch 7 vorgeschlagen.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Unter einer Schachttürschwelle kann eine untere Türschwelle einer Schachttüre eines Aufzugschachts eines Aufzugs verstanden werden. Die Schachttürschwelle kann sich entlang einer Kante zwischen einer Fußbodenfläche einer Etage und einer Wand des Aufzugschachts erstrecken. Die Schachttürschwelle kann in den Aufzugschacht hinein ragen. Die Schachttürschwelle kann einen Spalt zwischen einer Kabine des Aufzugs und der Kante im Wesentlichen ausfüllen. Die Schachttürschwelle kann auf oder an einer Trittfläche eine Führungseinrichtung für zumindest ein Türblatt der Schachttüre aufweisen. Die Führungseinrichtung kann eine oder mehrere Nuten zum Führen der Türe beziehungsweise der Türen umfassen. Die Schachttürschwelle kann beispielsweise ein Metallprofil sein.

Die Schachttürschwelle kann über zumindest zwei Winkelkonsolen an der Wand befestigt sein. Eine Winkelkonsole kann ein Befestigungswinkel sein. Die Winkelkonsole kann als Schwellensupport bezeichnet werden. Die Winkelkonsole kann dazu ausgebildet sein, eine insbesondere vertikale Last von der Schachttürschwelle auf die Wand zu übertragen. Die Winkelkonsole kann quer, insbesondere rechtwinklig, zueinander ausgerichtete Anlageflächen zum Anschrauben an der Wand und an der Schachttürschwelle aufweisen. Die Anlageflächen können an Schenkeln der Winkelkonsole angeordnet sein. Die Anlagefläche zur Schachttürschwelle kann an einem Auflageschenkel der Winkelkonsole angeordnet sein. Die Anlagefläche zur Wand kann an einem Wandschenkel der Winkelkonsole angeordnet sein. Die Winkelkonsole kann eine Schweißkonstruktion oder ein Stanzbiegeteil sein. Der Wandschenkel und der Auflageschenkel können durch zumindest eine Rippe versteift sein.

Eine Verschraubung der Winkelkonsole kann zumindest eine Schraube oder zumindest ein Stehbolzen zuzüglich einer entsprechenden Mutter umfassen. Zwischen einem Schraubenkopf der Schraube beziehungsweise der Mutter und der Winkelkonsole kann je zumindest eine Unterlegscheibe angeordnet sein. Eine Position der Winkelkonsole relativ zu der Verschraubung kann in einer Wirkrichtung der Winkelkonsole anforderungsgemäß gewählt werden. Die Wirkrichtung kann im Wesentlichen der Vertikalen entsprechen.

Eine Kulisse kann eine längliche Aussparung sein. Eine längere Abmessung der Kulisse kann in der Wirkrichtung ausgerichtet sein. Die Kulisse kann ein Durchbruch sein. Eine Lochplatte kann zumindest ein Loch als Aufnahme für die Verschraubung aufweisen. Die Aufnahme kann an einen Durchmesser des verwendeten Gewindes angepasst sein, insbesondere gleich oder größer als dieser sein. Die Lochplatte kann an unterschiedlichen Positionen entlang der Kulisse in der Kulisse angeordnet werden. Die Kulisse kann in verbautem Zustand im Wesentlichen vertikal ausgerichtet sein. Die Lochplatte kann durch die Unterlegscheibe der Verschraubung in der Kulisse gehalten werden. Die Unterlegscheibe kann größer sein, als die Kulisse breit ist. Damit kann die Unterlegscheibe seitlich neben der Kulisse aufliegen.

Eine Verzahnung kann in regelmäßigen Abständen Zähne aufweisen. Der Abstand zwischen zwei benachbarten Zähnen kann als Zahnteilung bezeichnet werden. Die Lochplatte kann an durch die Zähne vorgegebenen Positionen in die Kulisse eingelegt werden. Die Verzahnung der Lochplatte weist weniger Zähne aufals die Verzahnung der Kulisse. Zwischen den Zähnen weist die Verzahnung Lücken auf. Die Zähne und Lücken können im Wesentlichen gleich geformt bzw. komplementär zueinander sein. Die Verzahnung der Kulisse und die Verzahnung der Lochplatte können im Wesentlichen gleich geformt sein. Die Lücken können so geformt sein, dass pro Lücke ein Zahn der anderen Verzahnung vollständig in der Lücke angeordnet werden kann. Die Verzahnungen berühren sich in verzahntem Zustand zumindest punktuell und sind so formschlüssig miteinander verbunden. Von der einen Verzahnung auf die andere Verzahnung können in der Wirkrichtung wirkende Kräfte übertragen werden.

Eine Sicherungsplatte kann nachträglich an einer herkömmlichen Winkelkonsole montiert werden. Eine Anschlagkante kann eine gerade Kante der Sicherungsplatte sein. Eine Schmalseite der Kulisse kann benachbart zu der Anschlagkante angeordnet sein. Die Sicherungsplatte kann durch Anschieben der Anschlagkante an den Auflageschenkel vorpositioniert werden. Die Anschlagkante kann nach oben gegen den Auflageschenkel geschoben werden. Die Sicherungsplatte kann während des Verzahnens der Verzahnungen endgültig positioniert werden. Insbesondere kann beim endgültigen Positionieren ein geringer Spalt zwischen der Anschlagkante und dem Auflageschenkel entstehen. Eine Spaltbreite des Spalts kann kleiner als ein Toleranzbereich sein.

Gemäß der Erfindung ist die Aufnahme in der Wirkrichtung um einen Mittenversatz versetzt zu einer quer zu der Wirkrichtung ausgerichteten Bezugslinie der Verzahnung der Lochplatte ausgerichtet. Die Aufnahme ist durch eine Drehung der Lochplatte in der Kulisse relativ zur Bezugslinie positioniert. Die Bezugslinie kann rechtwinklig zur Wirkrichtung ausgerichtet sein. Die Bezugslinie kann einer Mittellinie eines Zahns oder einer Lücke der Verzahnung entsprechen. Ein Mittenversatz kann eine Strecke zwischen einer quer zu der Wirkrichtung ausgerichteten Mittellinie der Aufnahme und der Bezugslinie sein. Die Lochplatte kann in einer ersten Ausrichtung in die Kulisse eingelegt werden. Ebenso kann die Lochplatte in einer um die Bezugslinie um 180° rotierten zweiten Ausrichtung in die Kulisse eingelegt werden. Von der ersten Ausrichtung zur zweiten Ausrichtung ergibt sich ein Gesamtversatz der Aufnahme, der im Wesentlichen dem doppelten Mittenversatz entspricht.

Gemäß der Erfindung weist die Lochplatte benachbart zu der Aufnahme zumindest eine alternative Aufnahme für die Verschraubung auf. Die alternative Aufnahme ist in der Wirkrichtung um einen alternativen Mittenversatz versetzt zu einer insbesondere benachbarten alternativen Bezugslinie ausgerichtet. Durch zwei unterschiedlich angeordnete Aufnahmen kann die Verschraubung durch Drehen und/oder Wenden der Lochplatte in vier unterschiedlichen Positionen aufgenommen werden. Zur Verwendung der alternativen Aufnahme kann die Verzahnung der Lochplatte an einer anderen Position eingerastet werden.

Der Mittenversatz kann ein Achtel einer Zahnteilung der Verzahnung betragen. Der Gesamtversatz beim Drehen und/oder Wenden der Lochplatte beträgt dadurch ein Viertel der Zahnteilung, beispielsweise bei einer Zahnteilung von acht Millimetern also zwei Millimeter. Der alternative Mittenversatz kann drei Achtel der Zahnteilung betragen. Der Gesamtversatz beim Drehen und/oder Wenden der Lochplatte beträgt dadurch drei Viertel der Zahnteilung, beispielsweise bei einer Zahnteilung von acht Millimetern also sechs Millimeter. Durch Wechseln der Rastposition beträgt der Gesamtversatz dann ein ganzzahliges Vielfaches der Zahnteilung.

Die Lochplatte kann zum Ausrichten der Verzahnungen relativ zur Kulisse gedreht und/oder gewendet werden. Wenn die Position der Achse der Verschraubung festgelegt ist, kann die Verzahnung der Lochplatte durch Drehen um diese Achse und/oder Wenden so ausgerichtet werden, dass sie möglichst gut, d.h. versatzfrei oder versatzarm, zur Verzahnung der an der Winkelkonsole anliegenden Sicherungsplatte ausgerichtet ist. Bei einer einseitigen Verzahnung der Kulisse und der Lochplatte kann die Lochplatte durch Wenden in zwei Ausrichtungen in eine einzelne Rastposition der Kulisse eingelegt werden. Bei einer Aufnahme mit Mittenversatz zu der Bezugslinie dieser Rastposition ergeben sich so zwei unterschiedliche Positionen der Lochplatte relativ zu der Achse. Bei mehreren Aufnahmen pro Lochplatte mit jeweils unterschiedlichem Mittenversatz zu der Bezugslinie beziehungsweise jeweils unterschiedlichen Bezugslinien vervielfältigen sich die möglichen Positionen der Lochplatte. Durch eine Auswahl der am besten passenden Aufnahme, Rastposition und Ausrichtung für die Lochplatte können die Verzahnungen näherungsweise vollständig aneinander ausgerichtet werden.

Die Kulisse und/oder die Lochplatte können eine der Verzahnung gegenüberliegende, in der Wirkrichtung ausgerichtete weitere Verzahnung aufweisen. Die weitere Verzahnung kann zusätzliche Kontaktpunkte zum Übertragen von Kräften zwischen der Lochplatte und der Sicherungsplatte bereitstellen. Eine Kontaktfläche kann ebenso vergrößert werden. Durch zwei Verzahnungen kann eine symmetrische Krafteinleitung erreicht werden.

Die Verzahnung und die weitere Verzahnung können in der Wirkrichtung um eine halbe Zahnteilung zueinander versetzt sein. Die Verzahnung kann beispielsweise mit einem Zahn beginnen, während die weitere Verzahnung mit einer Lücke beginnt. Durch ein Drehen oder Wenden der Lochplatte kann so eine um die halbe Zahnteilung versetzte neue Rastposition erreicht werden. Durch den Versatz der Verzahnungen an der Lochplatte können mehrere Lochplatten durch einen die Verzahnung ausformenden Trennschnitt von einem Streifen Endlosmaterial abgeschnitten werden. So kann ein anfallender Stanzrest verringert werden. Bei einer beidseitigen und versetzten Verzahnung der Kulisse und der Lochplatte kann die Lochplatte in je zwei Ausrichtungen in zwei um die halbe Zahnteilung versetzte Rastpositionen der Kulisse eingelegt werden. Dabei vervielfältigen sich die möglichen Positionen der Lochplatte, um die Verzahnungen aneinander auszurichten.

Der Mittenversatz der einen Aufnahme kann 1/16 der Zahnteilung betragen. Der alternative Mittenversatz der alternativen Aufnahme kann 3/16 der Zahnteilung betragen. In Kombination ergeben sich durch Drehen und Wenden der Lochplatte acht Möglichkeiten zum Positionieren einer der Aufnahmen der Lochplatte innerhalb einer Zahnteilung. Die acht Möglichkeiten sind dabei regelmäßig über eine Zahnteilung verteilt.

Die Verzahnung kann als Passverzahnung ausgeführt sein. Die Verzahnungen der Kulisse und der Lochplatte können gleichartig beziehungsweise gegengleich sein. Die Verzahnung kann als Kreisbogenverzahnung mit aneinander angrenzenden Halbkreisbögen ausgeführt sein. Durch bogenförmige Zahnköpfe und Zahnfüße kann eine Kerbwirkung der Verzahnung minimiert werden.

Die Aufnahme kann als quer zu der Wirkrichtung ausgerichtetes Langloch ausgeführt sein. Die Aufnahme kann eine quer zu der Wirkrichtung ausgerichtete Anschlagfläche für die Verschraubung aufweisen. Durch die Ausführung als Langloch kann die Achse der Verschraubung quer zu der Wirkrichtung innerhalb eines Toleranzbereichs verschoben werden. Durch das Langloch kann die Montage vereinfacht werden.

Es wird darauf hingewiesen, dass einige der möglichen Merkmale und Vorteile der Erfindung hierin mit Bezug auf unterschiedliche Ausführungsformen der Sicherungsvorrichtung einerseits und des Verfahrens zum Nachrüsten einer Sicherungsplatte andererseits beschrieben sind. Ein Fachmann erkennt, dass die Merkmale im Schutzumfang der beigefügten Ansprüche in geeigneter Weise übertragen, kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Es zeigen:
- Figur 1:: eine Darstellung einer Schachttürschwelle mit Sicherungsvorrichtungen gemäß einem Ausführungsbeispiel;
- Figur 2a:: eine Darstellung einer Sicherungsplatte gemäß einem Ausführungsbeispiel;
- Figur 2b:: eine Darstellung einer Lochplatte für eine Sicherungsvorrichtung gemäß einem Ausführungsbeispiel; und
- Figuren 3a bis 3e:: einen Ablauf eines Verfahrens zum Nachrüsten einer Sicherungsplatte gemäß einem Ausführungsbeispiel.

Die Figuren sind lediglich schematisch und nicht maßstabsgetreu. Gleiche Bezugszeichen bezeichnen in den verschiedenen Figuren gleiche oder gleichwirkende Merkmale.

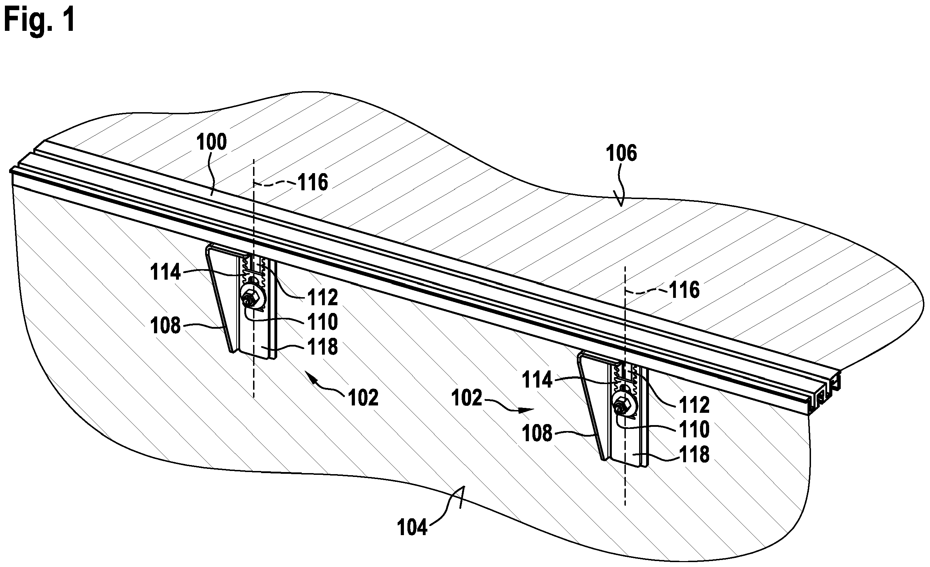

Fig. 1 zeigt eine Darstellung einer Schachttürschwelle 100 mit Sicherungsvorrichtungen 102 gemäß einem Ausführungsbeispiel. Die Schachttürschwelle 100 ist in einem Aufzugschacht an einer Kante zwischen einer Wand 104 des Aufzugschachts und einer Bodenfläche 106 einer Etage angeordnet. Die Schachttürschwelle 100 ist unter Verwendung von zwei Winkelkonsolen 108 an der Wand 104 befestigt.

Jede Winkelkonsole 108 ist über eine Verschraubung 110 an der Wand 104 verschraubt. Die Verschraubung 110 besteht hier aus je einem in die Wand 104 eingelassenen Ankerbolzen mit einem aus der Wand 104 ragenden Gewinde. Der Ankerbolzen kann beispielsweise in die Wand 104 eingeklebt sein. Auf das Gewinde ist je eine Unterlegscheibe aufgesteckt und eine Mutter aufgeschraubt. Beim Anziehen der Verschraubung 110 entsteht ein Reibschluss zwischen der Wand 104 und der Winkelkonsole 108.

Die Winkelkonsolen 108 weisen je zwei näherungsweise rechtwinklig zueinander ausgerichtete Schenkel auf, die durch eine näherungsweise rechtwinklig zu beiden Schenkeln ausgerichtete Rippe versteift sind. Der an der Wand 104 angeordnete Schenkel kann als Wandschenkel bezeichnet werden. Der an der Schachttürschwelle 100 anliegende Schenkel kann als Auflageschenkel bezeichnet werden.

Am Wandschenkel jeder Winkelkonsole 108 ist eine Sicherungsvorrichtung 102 angeordnet. Die Sicherungsvorrichtung 102 verhindert durch einen Formschluss ein Abrutschen der Winkelkonsole 108 an der Wand 104.

Die Sicherungsvorrichtung 102 weist eine mit der Winkelkonsole 108 gekoppelte Kulisse 112 und eine mit der Verschraubung 110 gekoppelte Lochplatte 114 auf. Die Kulisse 112 ist in einer Wirkrichtung 116 der Sicherungsvorrichtung 102 ausgerichtet. Die Wirkrichtung 116 entspricht hier im Wesentlichen einer Vertikalrichtung. Zwischen der Kulisse 112 und der Lochplatte 114 besteht ein Formschluss. Die Lochplatte 114 und die Kulisse 112 können in verbautem Zustand zumindest in der Wirkrichtung 116 nicht gegeneinander verschoben werden.

Hier ist die Sicherungsvorrichtung 102 Teil einer separaten Sicherungsplatte 118. Die Kulisse 112 ist ein in der Wirkrichtung 116 ausgerichteter schlitzförmiger Ausschnitt aus der Sicherungsplatte 118. Die Sicherungsplatte 118 ist zwischen dem Wandschenkel und der Unterlegscheibe geklemmt. Die Lochplatte 114 ist in der Kulisse 112 angeordnet und ebenfalls zwischen dem Wandschenkel und der Unterlegscheibe geklemmt. Der zwischen der Sicherungsplatte 118 beziehungsweise der Lochplatte 114 und der Wand 104 geklemmte Wandschenkel weist ein in der Wirkrichtung 116 ausgerichtetes Langloch für die Verschraubung 110 auf. Eine Anschlagkante der Sicherungsplatte 118 kann an dem Auflageschenkel der Winkelkonsole 108 anliegen, um den Formschluss zur Winkelkonsole 108 herzustellen.

Alternativ dazu kann die Sicherungsvorrichtung 102 auch Teil der Winkelkonsole 108 sein. Die Kulisse 112 ist dann ein Ausschnitt aus dem Wandschenkel. Dann ist die Lochplatte 114 zwischen der Wand 104 und der Unterlegscheibe in der Kulisse 112 angeordnet.

Die Lochplatte 114 ist in der Wirkrichtung 116 kürzer als die Kulisse 112. Die Kulisse 112 und die Lochplatte 114 sind jeweils passend zueinander verzahnt ausgeführt. Die Lochplatte kann also an unterschiedlichen, durch die Verzahnung vorgegebenen Positionen in der Kulisse 112 angeordnet werden. Die Positionen sind in der Wirkrichtung 116 versetzt zueinander.

Die Lochplatte 114 ist über eine Aufnahme zumindest in der Wirkrichtung 116 an der Verschraubung 110 geführt. Die Aufnahme ist durch die Unterlegscheibe verdeckt. Die Aufnahme kann beispielsweise als ein an einen Durchmesser des Ankerbolzens angepasstes Loch in der Lochplatte 114 ausgeführt sein. Wenn die Lochplatte 114 auf den Ankerbolzen aufgesteckt ist, ist die Position der Aufnahme zumindest in der Wirkrichtung 116 durch einen Formschluss fixiert.

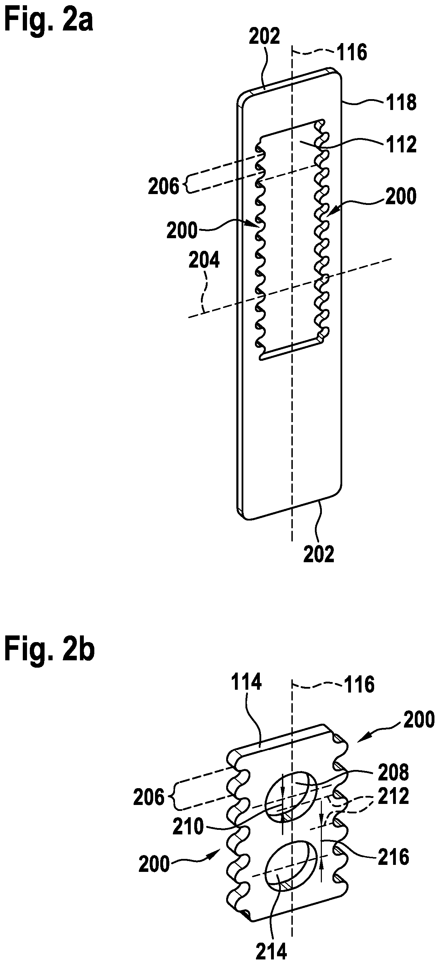

Fig. 2a zeigt eine Darstellung einer Sicherungsplatte 118 gemäß einem Ausführungsbeispiel. Die Sicherungsplatte 118 entspricht dabei im Wesentlichen einer der Sicherungsplatten in Fig. 1. Die Kulisse 112 ist als im Wesentlichen rechtwinkliger Ausschnitt aus der Sicherungsplatte 118 ausgebildet. Beide in der Wirkrichtung 116 ausgerichteten Seitenflächen der Kulisse 112 weisen hier eine Verzahnung 200 auf.

In einem nicht dargestellten Ausführungsbeispiel ist nur eine Seitenfläche der Kulisse 112 verzahnt.

Die quer zu der Wirkrichtung 116 ausgerichteten Seitenflächen der Sicherungsplatte 118 sind die Anschlagkanten 202 der Sicherungsplatte 118. Die Kulisse 112 ist zwischen den Anschlagkanten 202 angeordnet.

In einem Ausführungsbeispiel ist die Kulisse 122 außermittig zwischen den Anschlagkanten 202 angeordnet. Dabei ist eine Mitte 204 zwischen den Anschlagkanten 202 jedoch innerhalb der Kulisse 112 angeordnet.

In einem Ausführungsbeispiel sind die Verzahnungen 200 der beiden Seitenflächen um eine halbe Zahnteilung 206 in Wirkrichtung 116 versetzt zueinander angeordnet. Aufgrund dieses Versatzes kann die Lochplatte durch ein Wenden um eine in der Wirkrichtung 116 ausgerichtete Achse in unterschiedlichen Rastpositionen in die Kulisse 112 eingesetzt werden, die um je die halbe Zahnteilung 206 versetzt zueinander sind. Effektiv kann die Anzahl der Rastpositionen durch den Versatz um die halbe Zahnteilung 206 verdoppelt werden. Ebenso kann die Lochplatte in einer Ebene der Sicherungsplatte 118 um 180° gedreht werden, um die um die halbe Zahnteilung 206 versetzte Rastposition zu erreichen.

Fig. 2b zeigt eine Darstellung einer Lochplatte 114 für eine Sicherungsvorrichtung gemäß einem Ausführungsbeispiel. Die Lochplatte 114 entspricht dabei im Wesentlichen einer der Lochplatten in Fig. 1. Die Lochplatte 114 ist im Wesentlichen rechteckig. Die zwei gegenüberliegenden, in der Wirkrichtung 116 ausgerichteten Seitenflächen weisen eine Verzahnung 200 auf. Die Verzahnungen 200 der Kulisse 112 und der Lochplatte 114 sind gegengleich.

In einem nicht dargestellten Ausführungsbeispiel weist nur eine der Seitenflächen eine Verzahnung 200 auf.

Die Lochplatte 114 weist zumindest eine Aufnahme 208 auf. Die Aufnahme 208 ist ein Durchgangsloch. Die Aufnahme 208 ist entsprechend der Verschraubung dimensioniert.

In einem Ausführungsbeispiel ist die Aufnahme 208 als quer zu der Wirkrichtung 116 ausgerichtetes Langloch ausgeführt.

In einem Ausführungsbeispiel weist die Aufnahme 208 einen Mittenversatz 210 zu einer Bezugslinie 212 der Verzahnung auf. Die Bezugslinie 212 verläuft hier senkrecht zur Wirkrichtung 116 entlang einer virtuellen Symmetrieachse der Verzahnung 200. Die virtuelle Symmetrieachse der Verzahnung 200 ist dabei entweder eine Mittellinie eines Zahns oder einer Lücke der Verzahnung 200. Durch ein Wenden der Lochplatte 114 um die Symmetrieachse kann die Aufnahme 208 um den doppelten Mittenversatz 210 gegenüber der Bezugslinie 212 verschoben werden.

In einem Ausführungsbeispiel sind die Verzahnungen 200 der beiden Seitenflächen um eine halbe Zahnteilung 206 in der Wirkrichtung 116 versetzt zueinander angeordnet. Durch ein Drehen der Lochplatte um eine in der Wirkrichtung 116 ausgerichtete Achse kann die Aufnahme 208 um eine halbe Zahnteilung 206 verschoben werden.

In einem Ausführungsbeispiel weist die Lochplatte 114 eine alternative Aufnahme 214 auf. Entweder die Aufnahme 208 oder die alternative Aufnahme 214 kann an der Verschraubung ausgerichtet werden. Die alternative Aufnahme 214 weist einen alternativen Mittenversatz 216 zu einer anderen Bezugslinie 212 auf. Durch das Wenden der Lochplatte 114 um die Symmetrieachse kann die alternative Aufnahme 214 um den doppelten alternativen Mittenversatz 216 gegenüber der anderen Bezugslinie 212 verschoben werden.

In einem Ausführungsbeispiel sind die Verzahnungen der Kulisse 112 und der Lochplatte 114 als Kreisbogenverzahnung beziehungsweise Passverzahnungen ausgeführt. Dabei sind die Zähne und Täler kreisbogenförmig verrundet. Durch die Ausführung ohne scharfkantige Übergänge zwischen den Zähnen und Tälern weisen die Täler eine geringe Kerbwirkung auf.

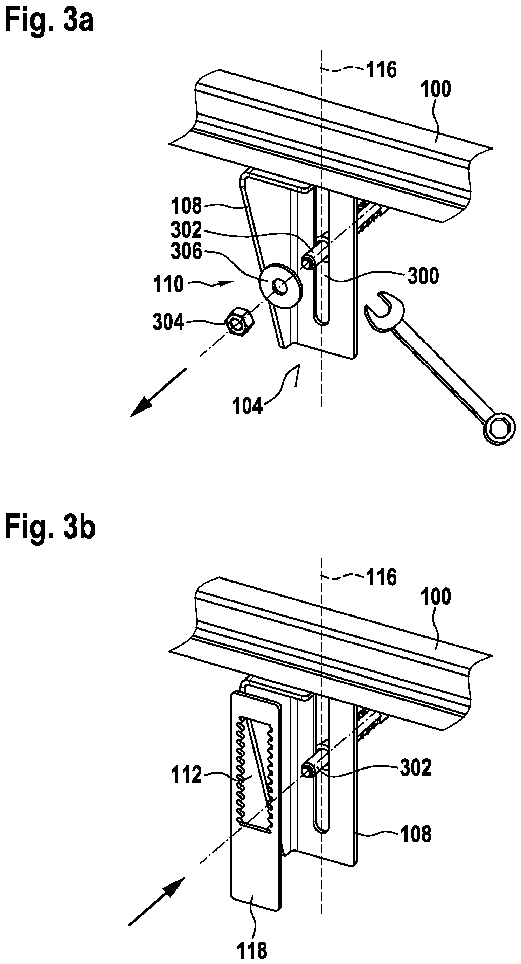

Fign. 3a bis 3e zeigen einen Ablauf eines Verfahrens zum Nachrüsten einer Sicherungsplatte 118 gemäß einem Ausführungsbeispiel. Die Sicherungsplatte 118 entspricht dabei im Wesentlichen der Sicherungsplatte in Fig. 2a.

In Fig. 3a ist eine konventionelle Winkelkonsole 108 mit einem in der Wirkrichtung 116 ausgerichteten Langloch 300 dargestellt. Die Winkelkonsole 108 ist wie in Fig. 1 mit einer Schachttürschwelle 100 verbunden. In dem Langloch 300 ist ein Gewindebolzen 302 der Verschraubung 110 angeordnet. Der Gewindebolzen 302 ist in der Wand 104 verankert. Eine auf den Gewindebolzen 302 geschraubte Mutter 304 wird gelöst und eine zwischen der Mutter 304 und dem Wandschenkel der Winkelkonsole 108 angeordnete Unterlegscheibe 306 wird abgenommen.

In Fig. 3b wird die Sicherungsplatte 118 so auf dem Wandschenkel angeordnet, dass der Gewindebolzen innerhalb der Kulisse 112 angeordnet ist.

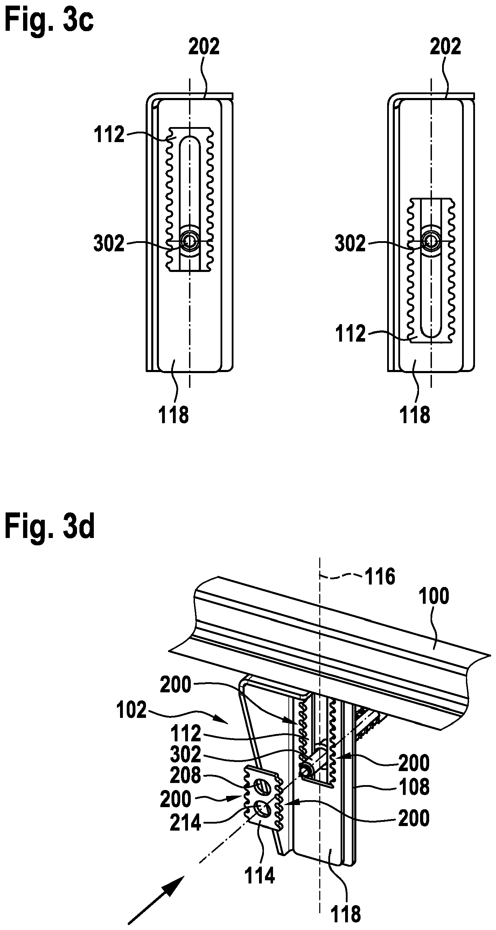

In Fig. 3c wird die Sicherungsplatte 118 so um den Gewindebolzen 302 rotiert, dass eine Anschlagkante 202 der Sicherungsplatte 118 an dem Auflageschenkel der Winkelkonsole 108 anliegen kann und der Gewindebolzen 302 einen erforderlichen Abstand zum Rand der Kulisse 112 aufweist. Anschließend wird die Anschlagkante 202 gegen den Auflageschenkel geschoben.

In Fig. 3d wird eine der Aufnahmen 214 der Lochplatte 114 über den Gewindebolzen 302 geschoben und getestet, ob die Verzahnungen 200 innerhalb eines Toleranzbereichs zueinander ausgerichtet sind. Wenn die Verzahnungen nicht innerhalb des Toleranzbereichs zueinander ausgerichtet sind, wird die Lochplatte 114 um den Gewindebolzen 302 gedreht und alternativ oder ergänzend die Lochplatte 114 von dem Gewindebolzen 302 abgenommen und die andere Aufnahme 208 probiert und alternativ oder ergänzend die Lochplatte 114 von dem Gewindebolzen 302 abgenommen und auf die Rückseite gewendet.

Durch das Drehen, Wenden und/oder Wechseln der Aufnahmen 208, 214 wird die Verzahnung 200 der Lochplatte 114 relativ zur Verzahnung 200 der Kulisse 112 verschoben. Wenn die Verzahnungen 200 innerhalb des Toleranzbereichs zueinander ausgerichtet sind, wird die Lochplatte 114 in die Kulisse 112 eingesetzt und der Formschluss zwischen den Verzahnungen 200 hergestellt. Dabei kann die Anschlagkante der Sicherungsplatte 118 maximal um die Toleranz von dem Auflageschenkel entfernt werden.

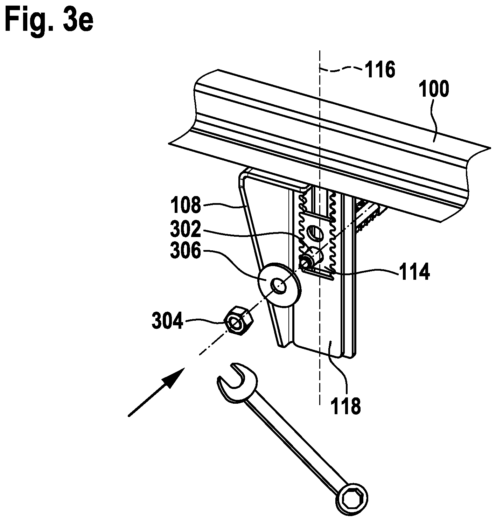

In Fig. 3e wird die Unterlegscheibe 306 wieder auf den Gewindebolzen 302 gesteckt und die Mutter 304 wieder auf den Gewindebolzen 302 geschraubt und mit dem bestimmungsgemäßen Drehmoment angezogen. Dabei werden die Sicherungsplatte 118 und die Lochplatte 114 zwischen der Unterlegscheibe 306 und dem Wandschenkel geklemmt. Die Winkelkonsole 108 beziehungsweise die Schachttürschwelle 100 kann jetzt um maximal die Toleranz in der Wirkrichtung 116 verrutschen, bis der Formschluss zwischen dem Auflageschenkel und der Anschlagkante ein Weiterrutschen verhindert.

Mit anderen Worten wird in den Fign 3a bis 3e eine Nachrüstung einer Schachttür-Schwellensupportsicherung gezeigt. So können bestehenden Anlagen nachgerüstet werden. Die Schachttür- Schwellensupportsicherung ist dabei einfach und schnell montierbar, formschlüssig und trotzdem einstellbar.

Durch das Anbringen einer zusätzlichen Sicherungsplatte mit Verzahnung, wird zwischen dem bestehenden Ankerbolzen und dem Schwellenwinkel eine formschlüssige Verbindung erreicht. Der Schwellenwinkel wird auf der Platte abgestützt und kann somit nicht mehr nach unten absinken.

Durch die Zahnteilung von 8 mm und die sich daraus ergebende versetzte Anordnung der Verzahnung um beispielsweise vier Millimeter und die aussermittige Anordnung der Bohrungen um beispielsweise zwei Millimeter entstehen durch das Wenden und Drehen der Lochplatte vier Möglichkeiten zum Einstellen. Die Lochplatte kann in Schritten von beispielsweise zwei Millimetern auf den bestehenden Ankerbolzen eingestellt werden. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, im Schutzumfang der beigefügten Ansprüche auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sicherungsvorrichtung (102) zum Sichern einer Position einer Winkelkonsole (108) einer Schachttürschwelle (100) eines Aufzugschachts, wobei die Sicherungsvorrichtung (102) eine in einer Wirkrichtung (116) ausgerichtete Kulisse (112) und eine in der Kulisse (112) anordenbare Lochplatte (114) mit einer in der Wirkrichtung (116) wirkenden Aufnahme (208) für eine Verschraubung (110) der Winkelkonsole (108) aufweist, wobei die Lochplatte (114) in der Wirkrichtung (116) kürzer ist als die Kulisse (112) und die Kulisse (112) sowie die Lochplatte (114) je zumindest eine in der Wirkrichtung (116) ausgerichtete Verzahnung (200) aufweisen, wobei die Lochplatte (114) in der Kulisse (112) durch einen Formschluss zwischen den Verzahnungen (200) fixierbar ist **dadurch gekennzeichnet dass** die Aufnahme (208) in der Wirkrichtung (116) um einen Mittenversatz (210) versetzt zu einer quer zu der Wirkrichtung ausgerichteten Bezugslinie (212) der Verzahnung (200) der Lochplatte (114) ausgerichtet ist, wobei die Aufnahme (208) durch eine Drehung der Lochplatte (114) in der Kulisse (112) relativ zur Bezugslinie (112) positionierbar ist und, dass die Lochplatte (114) benachbart zu der Aufnahme (208) zumindest eine alternative Aufnahme (214) für die Verschraubung (110) aufweist, wobei die alternative Aufnahme (214) in der Wirkrichtung (116) um einen alternativen Mittenversatz (216) versetzt zu der Bezugslinie (212) ausgerichtet ist.

2. Sicherungsvorrichtung (102) nach Anspruch 1, wobei der Mittenversatz (210) ein Achtel einer Zahnteilung (206) der Verzahnung (200) beträgt, und/oder der alternative Mittenversatz (216) drei Achtel der Zahnteilung (206) beträgt.

3. Sicherungsvorrichtung (102) nach einem der vorangehenden Ansprüche, wobei die Kulisse (112) und/oder die Lochplatte (114) eine der Verzahnung (200) gegenüberliegende, in der Wirkrichtung (116) ausgerichtete weitere Verzahnung (200) aufweisen.

4. Sicherungsvorrichtung (102) nach Anspruch 3, wobei die Verzahnung (200) und die weitere Verzahnung (200) um eine halbe Zahnteilung (206) zueinander versetzt sind.

5. Sicherungsvorrichtung (102) nach einem der vorangehenden Ansprüche, wobei die Verzahnung (200) als Passverzahnung ausgeführt ist.

6. Sicherungsvorrichtung (102) nach einem der vorangehenden Ansprüche, wobei die Aufnahme (208) als quer zu der Wirkrichtung (116) ausgerichtetes Langloch ausgeführt ist.

7. Verfahren zum Nachrüsten einer Sicherungsplatte (118) an einer Winkelkonsole (108) einer Schachttürschwelle (100) eines Aufzugschachts, wobei eine einen Wandschenkel der Winkelkonsole (108) mit einer Wand (104) des Aufzugschachts verbindende Verschraubung (110) gelöst wird, die Sicherungsplatte (118) an dem Wandschenkel angelegt wird und eine Anschlagkante (202) gegen einen Auflageschenkel der Winkelkonsole (108) geschoben wird, wobei die Aufnahme (208) einer Lochplatte (114) an der Verschraubung (110) ausgerichtet wird und die Verzahnung (200) der Lochplatte (114) innerhalb eines Toleranzbereichs an der Verzahnung (200) einer Kulisse (112) ausgerichtet wird, wobei die Verzahnungen (200) verzahnt werden während die Lochplatte (114) in der Kulisse (112) angeordnet wird und die Verschraubung (110) wieder verschraubt wird,
wobei die Sicherungsplatte (118) die in einer Wirkrichtung (116) ausgerichtete Kulisse (112) zur Anordnung der Lochplatte (114) und die quer zu der Wirkrichtung (116) ausgerichtete Anschlagkante (202) für die Winkelkonsole (108) aufweist, wobei die Kulisse (112) benachbart zu der Anschlagkante (202) als Ausschnitt aus der Sicherungsplatte (118) ausgeführt ist, und die Kulisse (112) zumindest eine in der Wirkrichtung (116) ausgerichtete Verzahnung (200) aufweist, wobei die Lochplatte (114) in der Kulisse (112) durch einen Formschluss zwischen den Verzahnungen (200) fixiert wird.

8. Verfahren gemäß Anspruch 7 wobei, die Sicherungsplatte (118) mit einer alternativen Anschlagkante (202) für die Winkelkonsole (108) versehen ist, wobei die Kulisse (112) in der Wirkrichtung (116) außermittig zwischen den Anschlagkanten (202) angeordnet ist, wobei insbesondere eine Mitte (204) zwischen den Anschlagkanten (202) innerhalb der Kulisse (112) angeordnet ist, wobei ein Einstellbereich der Kulisse (112) durch eine Drehung der Sicherungsplatte (118) relativ zur Winkelkonsole (108) gewählt wird.

9. Verfahren nach Anspruch 7 oder 8, wobei die Lochplatte (114) zum Ausrichten der Verzahnungen (200) relativ zur Kulisse (112) gedreht und/oder gewendet wird.

10. Verfahren nach einem der Ansprüche 7 bis 9, bei dem die Sicherungsplatte (118) zum Wählen eines Einstellbereichs der Kulisse (112) relativ zur Winkelkonsole (108) gedreht und/oder gewendet wird.

## Claims

1. A securing device (102) for securing a position of an angle bracket (108) of a shaft door threshold (100) of an elevator shaft, the securing device (102) having a slotted link (112) aligned in a direction of action (116) and a perforated plate (114) which can be arranged in the slotted link (112) and has a receptacle (208) acting in the direction of action (116) for a screw connection (110) of the angle bracket (108), the perforated plate (114) being shorter in the direction of action (116) than the slotted link (112) and the slotted link (112) and the perforated plate (114) having at least one toothing (200) which is aligned in the direction of action (116), the perforated plate (114) being fixable in the slotted link (112) by a form-fit between the toothings (200), **characterized in that** the receptacle (208) is aligned offset in the direction of action (116) by a center offset (210) relative to a reference line (212) of the toothing (200) of the perforated plate (114), the receptacle (208) being positionable relative to the reference line (112) by rotating the perforated plate (114) in the slotted link (112), and **in that** the perforated plate (114) has at least one alternative receptacle (214) for the screw connection (110) adjacent to the receptacle (208), the alternative receptacle (214) being aligned offset with respect to the reference line (212) in the direction of action (116) by an alternative center offset (216).

2. The securing device (102) according to claim, wherein the center offset (210) is one eighth of a tooth pitch (206) of the toothing (200), and/or the alternative center offset (216) is three eighths of the tooth pitch (206).

3. The securing device (102) according to either of the preceding claims, wherein the slotted link (112) and/or the perforated plate (114) have a further toothing (200) which is opposite the toothing (200) and aligned in the direction of action (116).

4. The securing device (102) according to claim 3, wherein the toothing (200) and the further toothing (200) are offset from one another by half a tooth pitch (206).

5. The securing device (102) according to any of the preceding claims, wherein the toothing (200) is designed as a tight-fitting toothing.

6. The securing device (102) according to any of the preceding claims, wherein the receptacle (208) is designed as an elongate hole aligned transversely with respect to the direction of action (116).

7. A method for retrofitting a securing plate (118) on an angle bracket (108) of a shaft door threshold (100) of an elevator shaft, wherein a screw connection (110) connecting a wall leg of the angle bracket (108) to a wall (104) of the elevator shaft is released, the securing plate (118) is applied to the wall leg and a stop edge (202) is pushed against a support leg of the angle bracket (108), wherein the receptacle (208) of a perforated plate (114) is aligned with the screw connection (110), and the toothing (200) of the perforated plate (114) is aligned within a tolerance range on the toothing (200) of a slotted link (112), wherein the toothings (200) are arranged in a toothed manner while the perforated plate (114) is arranged in the slotted link (112) and the screw connection (110) is re-screwed, wherein the securing plate (118) has the slotted link (112), which is aligned in a direction of action (116), for arranging the perforated plate (114) and the stop edge (202), which is aligned transversely to the direction of action (116), for the angle bracket (108), wherein the slotted link (112) is designed adjacent to the stop edge (202) as a cutout out of the securing plate (118), and the slotted link (112) has at least one toothing (200) which is aligned in the direction of action (116), wherein the perforated plate (114) is fixed in the slotted link (112) by a form-fit between the toothings (200).

8. The method according to claim 7, wherein the securing plate (118) is provided with an alternative stop edge (202) for the angle bracket (108), wherein the slotted link (112) is arranged eccentrically in the direction of action (116) between the stop edges (202), wherein in particular a center (204) is arranged between the stop edges (202) within the slotted link (112), wherein an adjustment range of the sloted link (112) is selected by rotating the securing plate (118) relative to the angle bracket (108).

9. The method according to claim 7 or claim 8, wherein the perforated plate (114) is rotated and/or turned relative to the slotted link (112) for alignment of the toothings (200).

10. The method according to any of claims 7 and 9, in which the securing plate (118) is rotated and/or turned relative to the angle bracket (108) in order to select an adjustment range of the slotted link (112).

## Revendications

1. Dispositif de sécurisation (102) destiné à la sécurisation d'une position d'une console en équerre (108) d'un seuil de porte de cage (100) d'une cage d'ascenseur, le dispositif de sécurisation (102) présentant une coulisse (112) orientée dans une direction d'action (116) et une plaque perforée (114) pouvant être agencée dans la coulisse (112) et comportant un logement (208) agissant dans la direction d'action (116) pour un assemblage vissé (110) de la console en équerre (108), la plaque perforée (114) étant plus courte dans la direction d'action (116) que la coulisse (112) et la coulisse (112) ainsi que la plaque perforée (114) présentant chacune au moins une denture (200) orientée dans la direction d'action (116), la plaque perforée (114) pouvant être fixée dans la coulisse (112) par une liaison par complémentarité de forme entre les dentures (200), **caractérisé en ce que** le logement (208) est orienté dans la direction d'action (116) de manière à être décalé d'un désaxage (210) par rapport à une ligne de référence (212), orientée transversalement par rapport à la direction d'action, de la denture (200) de la plaque perforée (114), le logement (208) pouvant être positionné par rapport à la ligne de référence (112) par une rotation de la plaque perforée (114) dans la coulisse (112) et **en ce que** la plaque perforée (114) présente, à proximité du logement (208), au moins un logement alternatif (214) pour l'assemblage vissé (110), le logement alternatif (214) étant orienté dans la direction d'action (116) de manière à être décalé d'un désaxage alternatif (216) par rapport à la ligne de référence (212).

2. Dispositif de sécurisation (102) selon la revendication 1, le désaxage (210) représentant un huitième d'un pas de dents (206) de la denture (200) et/ou le désaxage alternatif (216) représentant trois huitièmes du pas de dents (206).

3. Dispositif de sécurisation (102) selon l'une des revendications précédentes, la coulisse (112) et/ou la plaque perforée (114) présentant une autre denture (200) opposée à la denture (200) et orientée dans la direction d'action (116).

4. Dispositif de sécurisation (102) selon la revendication 3, la denture (200) et l'autre denture (200) étant décalées l'une par rapport à l'autre d'un demi-pas de dents (206).

5. Dispositif de sécurisation (102) selon l'une des revendications précédentes, la denture (200) étant conçue comme une denture à cannelures.

6. Dispositif de sécurisation (102) selon l'une des revendications précédentes, le logement (208) étant conçu comme un trou longitudinal orienté transversalement par rapport à la direction d'action (116).

7. Procédé pour le post-équipement d'une plaque de sécurisation (118) sur une console en équerre (108) d'un seuil de porte de cage (100) d'une cage d'ascenseur, un assemblage vissé (110) reliant un bras de paroi de la console en équerre (108) à une paroi (104) de la cage d'ascenseur étant défait, la plaque de sécurisation (118) étant placée contre le bras de paroi et un bord de butée (202) étant glissé contre un bras d'appui de la console en équerre (108), le logement (208) d'une plaque perforée (114) étant orienté au niveau de l'assemblage vissé (110) et la denture (200) de la plaque perforée (114) étant orientée, dans une plage de tolérance, au niveau de la denture (200) d'une coulisse (112), les dentures (200) étant imbriquées pendant que la plaque perforée (114) est agencée dans la coulisse (112) et l'assemblage vissé (110) étant de nouveau vissé, la plaque de sécurisation (118) présentant la coulisse (112) orientée dans une direction d'action (116) pour l'agencement de la plaque perforée (114) et le bord de butée (202) orienté transversalement par rapport à la direction d'action (116) pour la console en équerre (108), la coulisse (112) étant conçue en tant que découpe dans la plaque de sécurisation (118) à proximité du bord de butée (202) et la coulisse (112) présentant au moins une denture (200) orientée dans la direction d'action (116), la plaque perforée (114) étant fixée dans la coulisse (112) par une liaison par complémentarité de forme entre les dentures (200).

8. Procédé selon la revendication 7, la plaque de sécurisation (118) étant pourvue d'un bord de butée alternatif (202) pour la console en équerre (108), la coulisse (112) étant agencée dans la direction d'action (116) de manière décentrée entre les bords de butée (202), en particulier un centre (204) étant agencé entre les bords de butée (202) à l'intérieur de la coulisse (112), une plage de réglage de la coulisse (112) étant choisie par une rotation de la plaque de sécurisation (118) par rapport à la console en équerre (108).

9. Procédé selon la revendication 7 ou 8, la plaque perforée (114) étant tournée et/ou retournée pour l'orientation des dentures (200) par rapport à la coulisse (112).

10. Procédé selon l'une des revendications 7 à 9, dans lequel la plaque de sécurisation (118) est tournée et/ou retournée pour la sélection d'une plage de réglage de la coulisse (112) par rapport à la console en équerre (108).
